# EUROPÄISCHE PATENTSCHRIFT

(11) **EP 3 268 260 B1**
(45) Veröffentlichungstag und Bekanntmachung des Hinweises auf die Patenterteilung: **23.10.2019**
(21) Anmeldenummer: 16709084.4
(22) Anmeldetag: 10.03.2016
(51) Int. Cl.: B62D 1/184, B62D 1/19

(54) **LENKSÄULE FÜR EIN KRAFTFAHRZEUG**
STEERING COLUMN FOR A MOTOR VEHICLE
COLONNE DE DIRECTION POUR UN VÉHICULE AUTOMOBILE

(30) Priorität: 12.03.2015 DE 102015204476
(43) Veröffentlichungstag der Anmeldung: 17.01.2018
(73) Patentinhaber: ThyssenKrupp Presta AG, 9492 Eschen (LI); thyssenkrupp AG, 45143 Essen (DE)
(72) Erfinder: AGBOR, Thomas, 66424 Homburg (DE); GEISELBERGER, Thomas, 9008 St. Gallen (CH); GANAHL, Johannes, 6780 Schruns (AT); FLEISCHER, Martin, 9436 Balgach (CH)
(74) Vertreter: thyssenkrupp Intellectual Property GmbH
(86) Internationale Anmeldenummer: PCT/EP2016/055169
(87) Internationale Veröffentlichungsnummer: WO 2016/142482

(56) Entgegenhaltungen:
- DE-B3-102008 034 807
- DE-B3-102009 059 159

## Beschreibung

### Stand der Technik

Die Erfindung betrifft eine Lenksäule für ein Kraftfahrzeug, umfassend
eine in einem inneren Mantelrohr um ihre Längsachse drehbar gelagerte Lenkspindel,
eine äußere Manteleinheit, in der das innere Mantelrohr gehaltert ist,
die mit der Karosserie eines Kraftfahrzeugs verbindbar ist,
eine Spanneinrichtung, die in Fixierstellung die äußere Manteleinheit relativ zu dem inneren Mantelrohr festlegt und die in Freigabestellung eine Verstellung des inneren Mantelrohrs relativ zur äußeren Manteleinheit zumindest in Längsrichtung freigibt,
wobei die Spanneinrichtung mindestens ein Arretierteil aufweist, welches sich in Längsrichtung an der äußeren Manteleinheit abstützt und in Fixierstellung in Längsrichtung unverschiebbar mit einem Eingriffsteil verbunden ist, welches mit dem inneren Mantelrohr verbunden ist, und in Freigabestellung von dem Eingriffsteil gelöst ist und eine relative Bewegung des inneren Mantelrohrs zur äußeren Manteleinheit in Längsrichtung freigibt,
wobei das innere Mantelrohr und die äußere Manteleinheit über eine Energieabsorp-tionseinrichtung gekoppelt sind, die zumindest zwei Energieabsorptionselemente aufweist, von denen zumindest ein erstes oder ein zweites Energieabsorptionselement zwischen dem inneren Mantelrohr und dem Eingriffsteil einkoppelbar ist, welches in eingekoppeltem Zustand in Fixierstellung der Spanneinrichtung bei einer relativen Verschiebung von innerem Mantelrohr und äußerer Manteleinheit plastisch verformt wird, wobei zumindest das erste und zweite Energieabsorptionselement bezüglich der Längsachse in einer Radialrichtung auf der gleichen Seite des inneren Mantelrohrs angeordnet sind.

Zur Anpassung der Lenkradposition an die Sitzposition des Fahrers eines Kraftfahrzeugs sind derartige Lenksäulen in unterschiedlichen Ausführungsformen im Stand der Technik bekannt. Neben einer Höhenverstellung durch die Einstellung der Neigung der Lenksäule kann das am hinteren Ende der Lenkspindel angebrachte Lenkrad bei gattungsgemäßen Lenksäulen durch eine Längenverstellung in Richtung der Lenksäulen-Längsachse im Fahrzeuginnenraum positioniert werden.

Die Längenverstellbarkeit wird dadurch realisiert, dass die Stelleinheit, bestehend aus einer Manteleinheit und einem Mantelrohr, wobei das innere Mantelrohr die drehbar gelagerte Lenkspindel umfasst, in Längsrichtung teleskopartig verstellbar ist und mittels einer lösbaren Spanneinrichtung in unterschiedlichen Längspositionen feststellbar, d.h. lösbar fixierbar ist. Die Spanneinrichtung, auch als Feststelleinrichtung bezeichnet, wirkt auf eine an der Karosserie gehaltene äußere Manteleinheit, wobei in geöffnetem Zustand der Spanneinrichtung - auch gleichbedeutend als Freigabestellung oder Löseposition bezeichnet - eine Verschiebung des inneren Mantelrohrs in der äußeren Manteleinheit zur Einstellung der Lenkradposition möglich ist und in geschlossenem Zustand - Fixierstellung oder Feststellposition - das innere Mantelrohr in der äußeren Manteleinheit verspannt ist und im normalen Fahrbetrieb die Lenkradposition unter den zu erwartenden mechanischen Beanspruchungen fixiert ist.

Als wirksame Maßnahme zur Verbesserung der Insassensicherheit bei einem Fahrzeugzusammenstoß, dem sogenannten Crashfall, bei dem der Fahrer mit hoher Geschwindigkeit auf das Lenkrad aufprallt, ist es bekannt, die Lenksäule auch in Fixierstellung der Spanneinrichtung in Längsrichtung zusammenschiebbar zu gestalten, wenn ein hohe Kraft auf das Lenkrad ausgeübt wird, die einen Grenzwert überschreitet, der nur im Crashfall auftritt. Um für eine kontrollierte Abbremsung eines auf das Lenkrad auftreffenden Körpers zu sorgen, ist zwischen der äußeren Manteleinheit und dem inneren Mantelrohr, die im Normalbetrieb durch die Spanneinrichtung miteinander fixiert sind, im Crashfall jedoch relativ zueinander zusammengeschoben werden, eine Energieabsorptionseinrichtung eingekoppelt. Diese setzt die eingeleitete kinetische Energie in plastische Verformung eines Energieabsorptionselements um, beispielsweise durch Aufreißen einer Reisslasche oder Verbiegen eines langgestreckten Biegeelements, etwa eines Biegedrahts oder Biegestreifens.

Eine gattungsgemäße Lenksäule ist in der DE 10 2008 034 807 B3 beschrieben. Die darin beschriebene Spanneinrichtung umfasst ein Arretierteil an der äußeren Manteleinheit, welches quer zur Längsrichtung mit einem korrespondierendem Eingriffsteil an dem inneren Mantelrohr in Fixierstellung kraft- und formschlüssig in Eingriff gebracht werden kann. In Freigabestellung wird das Arretierteil vom Eingriffsteil abgehoben, d.h. gelöst, so dass das innere Mantelrohr in Längsrichtung zur Verstellung der Lenkradposition verschiebbar ist.

Das Eingriffsteil ist über eine Energieabsorptionseinrichtung mit dem inneren Mantelrohr verbunden, die im Normalbetrieb nicht beansprucht wird, d.h. eine starre Verbindung zwischen äußerer Manteleinheit und innerem Mantelrohr bildet. Im Crashfall jedoch wird über das Arretierteil eine so große Kraft eingeleitet, dass sich die äußere Manteleinheit und das innere Mantelrohr in Längsrichtung gegeneinander bewegen, wobei das Energieabsorptionselement verformt und dadurch die Bewegung abgebremst wird.

In der besagten DE 10 2008 034 807 B3 wird weiterhin vorgeschlagen, die Bremswirkung der Energieabsorptionseinrichtung steuerbar zu gestalten, um im Crashfall zu berücksichtigen, ob der Fahrer angegurtet ist oder nicht, oder eine Anpassung an Parameter wie Fahrergewicht, Abstand vom Lenkrad und dergleichen vornehmen zu können. Im Einzelnen sollen hierzu mindestens zwei Energieabsorptionselemente vorgesehen werden, die bei Bedarf aktiviert werden können, indem sie zwischen der äußeren Manteleinheit und dem inneren Mantelrohr eingekoppelt werden, d.h. wie oben beschrieben in mechanische Wirkverbindung zwischen dem Eingriffsteil und dem inneren Mantelrohr gebracht werden können. Dabei kann zumindest ein erstes oder ein zweites Energieabsorptionselement zwischen dem inneren Mantelrohr und dem Eingriffsteil eingekoppelt werde, d.h. entweder das erste oder das zweite oder beide Energieabsorptionselemente. Auf diese Weise kann eine individuell an den jeweiligen Bedarfsfall angepasste Bremscharakteristik, d.h. ein Crashniveau bzw. Crashlevel realisiert werden.

Nachteilig an der vorbekannten Energieabsorptionseinrichtung ist jedoch, dass die einzelnen Energieabsorptionselemente an jeweils eigenen Befestigungseinrichtungen auf gegenüberliegenden Seiten des inneren Mantelrohrs angeordnet sind. Dadurch wird zum einen relativ viel Bauraum beansprucht, welcher die Flexibilität bei der Integration in eine Fahrzeugkarosserie einschränkt. Zum anderen ist die Fertigung und separate Anbringung von mindestens zwei Energieabsorptionselementen einschließlich der jeweils erforderlichen Befestigungsmittel durch die hohe Anzahl der erforderlichen Bauteile aufwendig und entsprechend kostenintensiv. Eine mögliche Anordnung auf der gleichen Seite des inneren Mantelrohrs löst die genannten Probleme ebenfalls nicht.

Angesichts der vorangehend erläuterten Problematik ist es eine Aufgabe der vorliegenden Erfindung, eine Lenksäule der eingangs genannten Art mit zumindest zwei Crashniveaus zur Verfügung zu stellen, welche einen geringeren Bauraum beansprucht und eine einfachere und kostengünstigere Fertigung ermöglicht.

### Darstellung der Erfindung

Zur Lösung der vorgenannten Problematik wird erfindungsgemäß vorgeschlagen, dass die Energieabsorptionselemente bezüglich der Längsachse in einer Radialrichtung sandwichartig benachbart angeordnet sind.

Die Erfindung sieht vor, dass das erste und das zweite Energieabsorptionselement bezüglich der Längsachse in einer Radialrichtung sandwichartig übereinander oder benachbart angeordnet sind. In dieser Bauform sind zwei oder mehr Energieabsorptionselemente stapelförmig übereinander oder nebeneinander angeordnet und bilden eine besonders kompakte Baugruppe.

Erfindungsgemäß sind erste und zweite Energieabsorptionselement nicht wie im Stand der Technik an separaten Positionen auf unterschiedlichen Seiten des Mantelrohrs angeordnet, sondern auf einer einzigen Seite des inneren Mantelrohrs zusammengefasst. Mit anderen Worten sind die bisher zur Realisierung unterschiedlicher Crashniveaus erforderlichen, mindestens zwei Energieabsorptionseinrichtungen mit jeweils einem Energieabsorptionselement, die einzeln angefertigt und auf gegenüberliegenden Seiten der Lenksäule montiert werden mussten, erfindungsgemäß in einer einzigen integrierten Energieabsorptionseinrichtung mit mindestens zwei Crashniveaus zusammengefasst.

Die erfindungsgemäße Energieabsorptionseinrichtung weist mindestens zwei Energieabsorptionselemente auf, die bei Bedarf einzeln oder zusammen aktiviert werden können. Die Aktivierung kann erfolgen, indem ein Energieabsorptionselement zwischen dem inneren Mantelrohr und dem Eingriffsteil eingekoppelt wird, d.h. dass zwischen dem Energieabsorptionselement und dem Mantelrohr und dem Eingriffsteil eine mechanische Wirkverbindung geschaffen wird, durch die das Energieabsorptionselement in den Kraftfluss zwischen Mantelrohr und Eingriffsteil eingefügt wird, dass eine relative Verschiebung von inneren Mantelrohr und Eingriffsteil eine Verformung des Energieabsorptionselements und damit eine Energieabsorption bewirkt. Dadurch wird das innere Mantelrohr gegenüber der äußeren Manteleinheit, die über das Arretierteil mit dem Eingriffsteil verbunden ist, kontrolliert abgebremst. Das Crashniveau bzw. der Betrag der Abbremsung kann durch eine gesteuerte Einkopplung von Energieabsorptionselementen erhöht und umgekehrt durch eine Auskopplung verringert werden.

Ein besonderer Vorteil der Erfindung ist, dass mindestens besagte zwei, und gegebenenfalls weitere Energieabsorptionselemente in einer erfindungsgemäßen Energieabsorptionseinrichtung baulich zu einer integrierten Einheit zusammengefasst werden können, die als Ganzes auf einer Seite des Mantelrohrs bzw. der Lenksäule montiert werden kann. Durch die Zusammenfassung in einer integrierten Einheit können gegenüber der im Stand der Technik bekannten separaten Bauweise Bauteile eingespart werden, beispielsweise Befestigungselemente zur Verbindung der Energieabsorptionselemente mit dem Eingriffsteil und dem inneren Mantelrohr. Dadurch kann der Fertigungs- und Kostenaufwand verringert werden. Darüber hinaus wird eine besonders kompakte Bauform einer Energieabsorptionseinrrichtung mit zwei oder mehr Crashniveaus ermöglicht, welche weniger Einbauraum erfordert als im Stand der Technik.

Bevorzugt sind die mindestens zwei Energieabsorptionselemente in einem gemeinsamen Gehäuse angeordnet. Das Gehäuse bildet einen Teil der erfindungsgemäßen Energieabsorptionseinrichtung, der die Energieabsorptionselemente zumindest teilweise umschließt und gegen Störeinflüsse schützt. Weiterhin können in oder an dem Gehäuse Befestigungselemente für die Energieabsorptionselemente, Längsführungen für das Eingriffsteil und dergleichen ausgebildet werden.

In einer vorteilhaften Bauform ist zwischen den Energieabsorptionselementen ein Separierungselement angeordnet. Ein Separierungselement kann beispielsweise durch eine Trennwand oder ein zwischen benachbarte Energieabsorptionselemente eingelegtes Trennblech gebildet werden. Dadurch werden benachbarte Energieabsorptionselemente funktional sicher voneinander abgeschirmt, so dass die Funktion eines Energieabsorptionselements nicht durch benachbarte Energieabsorptionselemente beeinflusst werden kann. Dies kommt einer erhöhten Betriebs- und Funktionssicherheit im Crashfall zugute.

Eine Ausführungsform der Erfindung sieht vor, dass zumindest eines der Energieabsorptionselemente als langgestrecktes Biegeelement ausgebildet ist, das zwei über eine Umbiegung miteinander verbundene Schenkel aufweist, wobei der eine Schenkel am Eingriffsteil festlegbar ist und der andere Schenkel an dem inneren Mantelrohr in Längsrichtung abstützbar ist. Es ist bekannt, als Energieabsorptionselement einen Biegedraht oder Biegestreifen einzusetzen, der durch eine Umbiegung von bevorzugt 180° U-förmig ausgebildet ist, wobei sich die Schenkel im Wesentlichen parallel zur Längsrichtung erstrecken, wobei unter "im Wesentlichen parallel" eine Abweichung mit einem Raumwinkel von ±10°verstanden wird. Das Ende des einen Schenkels ist mit dem inneren Mantelrohr bezüglich einer Bewegung in Längsrichtung verbunden, beispielsweise indem es sich im Crashfall an einem Anschlag oder Widerlager abstützt. Das andere Ende wird zur Einkopplung mit dem Eingriffsteil verbunden, beispielsweise durch Einfügen eines stiftförmigen Kopplungselements oder Mitnehmers, von dem besagtes Ende im Crashfall in Längsrichtung mitgenommen wird. Bei einer relativen Verschiebung der beiden Enden im Crashfall wandert die Durchbiegung über die Längserstreckung des Biegeelements, wobei durch Verformungsarbeit kinetische Energie umgesetzt bzw. absorbiert wird. Erfindungsgemäß können zwei oder mehr langgestreckte Biegeelemente wie oben beschrieben in radialer Richtung stapelförmig übereinander angeordnet werden.

Ein Biegestreifen in der vorangehend beschriebenen Ausführung erstreckt sich mit seiner Umbiegung parallel zu einer Ebene, womit gemeint ist, dass die U-förmige Erstreckung in einer Ebene bzw. parallel zu einer Ebene liegt. Entsprechend liegt die Mittellinie der Längserstreckung des Biegestreifens auf einer Streifenebene. Anders ausgedrückt erfolgt die Umbiegung der Biegestreifen bogenförmig um einen Winkel von bevorzugt 180° um eine Biegeachse, die den Mittelpunkt der bogenförmigen Umbiegung bildet und senkrecht zur der Streifenebene ausgerichtet ist, und damit parallel zur Flächennormale der Streifenebene steht. Die Flächennormale verläuft quer, bevorzugt senkrecht zur Längsachse. Bevorzugt schneidet die Flächennormale die Längsachse. Zwischen den Schenkeln und der Umbiegung wird jeweils eine Eingriffsöffnung eines Energieabsorptionselements geformt.

Erfindungsgemäß können zumindest zwei Biegestreifen senkrecht zu dieser Streifenebene stapelförmig nebeneinander angeordnet sein, so dass zwei Biegestreifen mit ihrer Streifenebenen parallel und beabstandet zueinander ausgerichtet sind. Dabei sind die Biegestreifen bevorzugt so angeordnet, dass ihre Biegeachsen zueinander auf einer Linie, also in Richtung dieser Flächennormalen, liegen. Dadurch sind die Biegestreifen so übereinander gestapelt, dass sie mit ihren Eingriffsöffnungen zumindest teilweise deckungsgleich übereinander liegen. Dadurch kann beispielsweise ein Mitnehmerstift in Richtung der Flächennormalen die Eingriffsöffnungen erfindungsgemäß übereinander gestapelter Energieabsorptionselemente durchgreifen bzw. in diese eintauchen.

Zur Realisierung der vorangehend erläuterten Anordnung kann vorgesehen sein, dass die Energieabsorptionselemente bezüglich der Längsachse in einer Radialrichtung sandwichartig benachbart angeordnet sind, wobei sich die Umbiegung der Biegestreifen jeweils parallel zu einer Ebene erstreckt, zu der die Biegestreifen senkrecht stapelförmig nebeneinander angeordnet sind. Durch diese stapelförmige Anordnung der Biegestreifen senkrecht zur Ebene ihrer jeweiligen Umbiegung beeinflusst die Verformung des einen Biegestreifens nicht die Verformung des jeweils anderen Biegestreifens. Damit kann eine sandwichartig-stapelförmige Anordnung von zwei oder mehr Biegestreifen zur Verfügung gestellt werden, bei der keine unerwünschte gegenseitige Beeinflussung des Energieabsorptionsverhaltens der Biegestreifen erfolgt.

Weiterhin ist es vorteilhaft, dass zumindest ein Biegeelement und/oder das Gehäuse und/oder das Separierungselement mit einer Gleitbeschichtung versehen ist. Dadurch wird gewährleistet, dass die Verformung des Biegedrahts oder Biegestreifens im Crashfall gleichmäßig abläuft und nicht durch Reibung oder Festfressen behindert wird, falls Teile der Biegeelemente miteinander oder mit umgebenden Bauteilen wie dem Gehäuse in Kontakt kommen. Dadurch wird die Funktionssicherheit erhöht.

In einer weiteren vorteilhaften Ausführung ist in dem Gehäuse ein Innenprofil aufgenommen. Dieses Innenprofil ist zumindest teilweise zwischen dem Biegedraht bzw. Biegestreifen und dem Gehäuse angeordnet. Dabei dient das Innenprofil der vereinfachten Montage der Biegedrähte bzw. Biegestreifen im Gehäuse bevor dieses an dem inneren Mantelrohr fixiert wird. Bevorzugt besteht das Innenprofil aus einem Federstahlblech, beispielsweise aus der Stahlsorte C75S.

Eine Ausführungsform der Erfindung sieht vor, dass die Energieabsorptionseinrichtung eine Stellvorrichtung aufweist, mit einem bewegbaren Koppelelement, welches bei Aktivierung der Stellvorrichtung ein Energieabsorptionselement zwischen dem inneren Mantelrohr und dem Eingriffsteil einkoppelt oder ausgekoppelt. Zur gesteuerten Aktivierung oder Deaktivierung eines Energieabsorptionselements im Crashfall ist es wie beschrieben erforderlich, dass es in den Kraftfluss zwischen innerem Mantelrohr und äußerer Manteleinheit eingefügt oder ausgefügt wird, konkret zwischen dem Eingriffsteil und dem inneren Mantelrohr. Die Verbindung oder Lösung kann erfolgen, indem bei einer Auslösung der Stellvorrichtung im Crashfall das Koppelelement so bewegt wird, dass es beispielsweise ein Ende eines vorangehend beschriebenen Biegeelements formschlüssig in Längsrichtung mit dem Eingriffsteil verriegelt oder entriegelt. Als Koppelelement kann auch ein Anschlag am inneren Mantelrohr in Arbeitsposition bewegt werden, oder ein sonstiges Verbindungselement in Wirkeingriff zwischen Energieabsorptionselement und Mantelrohr oder/und Eingriffsteil eingelockt oder ausgelockt werden.

Bevorzugt ist vorgesehen, dass die Stellvorrichtung einen pyroelektrischen Aktuator aufweist, der zum pyrotechnischen Antrieb des Koppelelements ansteuerbar ist. Ein pyroelektrischer Aktuator, oft auch als "Pyroswitch" oder "Pyroschalter" bezeichnet, weist eine pyrotechnische Treibladung auf, die durch einen elektrischen Impuls gezündet wird. Die Explosion der Treibladung beschleunigt einen beweglichen Aktuator, der in der vorliegenden Anwendung mit einem Koppelelement verbunden ist. Dadurch kann das Koppelelement mit dem Eingriffsteil und dem Energieabsorptionselement in Eingriff oder außer Eingriff gebracht werden, oder auf andere Art eine mechanische Kopplung von Eingriffsteil, Energieabsorptionselements und innerem Mantelrohr bewerkstelligen. Vorteile einer derartigen pyroelektrischen Stellvorrichtung sind die extrem schnelle Auslösung im Crashfall sowie die hohe Zuverlässigkeit und Betätigungskraft, welche im Bedarfsfall eine sichere Einkopplung oder Auskopplung eines oder mehrerer Energieabsorptionselemente gewährleistet. Beispielsweise kann das Koppelelement als stiftförmiger Mitnehmer ausgebildet sein, der zur Verriegelung des Eingriffsteils mit einem Energieabsorptionselement in Formschlussausnehmungen eingeschossen oder herausgeschossen wird.

Vorzugsweise ist die Stellvorrichtung an der Energieabsorptionseinrichtung angebracht, auf der Seite der Lenksäule, wo erfindungsgemäß die Energieabsorptionselemente angeordnet sind.

Eine Ausführungsform der Erfindung sieht vor, dass die äußere Manteleinheit in einer Konsole gehalten ist, die am Fahrzeug fixierbar ist. Somit kann eine besonders steife Anbindung der Lenksäule am Fahrzeug realisiert werden.

Die Manteleinheit wird dabei bevorzugt an einem vorderen Ende der Konsole verschwenkbar um eine Schwenkachse gehalten und zwischen zwei Seitenwangen der Konsole aufgenommen, wobei mittels der Spanneinrichtung die Manteleiheit gegenüber der Konsole festsetzbar ist.

Durch die Bereitstellung der Schwenkachse zwischen der Manteleiheit under Konsole kann die Neigungsverstellung der Manteleinheit gegenüber der Konsole realisiert werden. Somit kann die Neigungsverstellung, auch Höhenverstellung genannt, der Manteleinheit noch vereinfacht werden, im Gegensatz zur Anbringung der Manteleinheit direkt am Fahrzeug mittels einer Achse die durch eine Aufnahmebohrung der Manteleinheit und einer entsprechenden Aufnahmeabschnitts des Fahrzeugquerträgers gesteckt werden muss, um die Schwenkachse bereitzustellen.

### Beschreibung der Zeichnungen

Vorteilhafte Ausführungsformen der Erfindung werden im Folgenden anhand der Zeichnungen näher erläutert. Im Einzelnen zeigen:
- Figur 1: eine erfindungsgemäße Lenksäule in einer perspektivischen Ansicht,
- Figur 2: eine Teilansicht der Lenksäule wie in Figur 1 im Normalzustand,
- Figur 3: eine Teilansicht der Lenksäule wie in Figur 1 in zusammengeschobenen Zustand nach einem Crashfall,
- Figur 4: eine Teilansicht der Spanneinrichtung gemäß Figur 1 bis 4,
- Figur 5: eine erfindungsgemäße Energieabsorptionseinrichtung einer Lenksäule gemäß Figuren 1 bis 4 in auseinandergezogener Ansicht,
- Figur 6: ein Längsschnitt A-A durch eine Energieabsorptionseinrichtung gemäß Figur 4 bzw. Figur 5 im Normalzustand,
- Figur 7: ein Längsschnitt A-A durch eine Energieabsorptionseinrichtung wie in Figur 6 nach einem Crashfall,
- Figur 8: einen Querschnitt C-C durch eine Lenksäule gemäß Figur 4 bzw. Figur 5 in einem ersten Betriebszustand,
- Figur 9: einen Querschnitt C-C durch eine Lenksäule wie in Figur 8 in einem zweiten Betriebszustand,
- Figur 10: eine zweite Ausführungsform einer erfindungsgemäßen Energieabsorptionseinrichtung in auseinandergezogener Ansicht.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

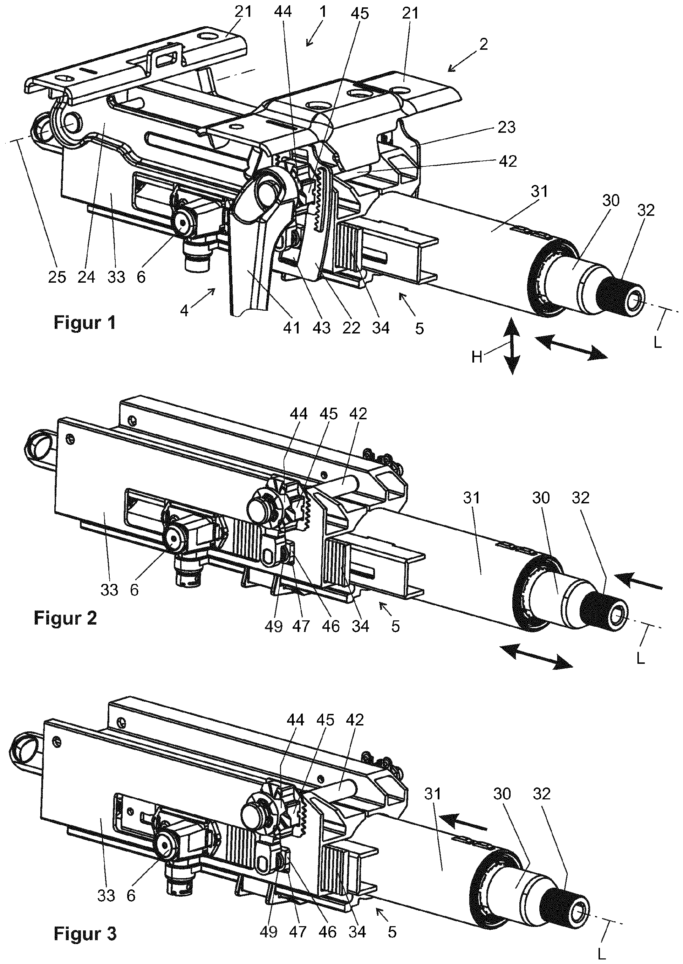

In Figuren 1, 2 und 3 ist eine erfindungsgemäße Lenksäule 1 schematisch in perspektivischer Ansicht schräg von hinten (bezogen auf die Fahrtrichtung eines nicht gezeigten Kraftfahrzeugs) dargestellt.

Die Lenksäule 1 kann an der Karosserie eines nicht dargestellten Kraftfahrzeugs mittels einer Konsole 2 befestigt werden, die der Übersichtlichkeit halber in den Ansichten von Figur 2 und 3 weggelassen ist. Die Konsole 2 umfasst zur Verbindung mit der Karosserie Befestigungsmittel 21, von denen sich Seitenwangen 22, 23 erstrecken, sowie eine Schwinge 24 zur Aufnahme einer Schwenkachse 25.

Eine Lenkspindel 30 ist um die Längsachse L drehbar in einem inneren Mantelrohr 31, kurz als Mantelrohr 31 bezeichnet, gelagert, wobei auf dem hinteren Ende 32 ein nicht dargestelltes Lenkrad auf der Lenkspindel 30 anbringbar ist. Das innere Mantelrohr 31 ist in einer in Längsrichtung durchgehenden Aufnahme einer äußeren Manteleinheit 33, kurz Manteleinheit 33, gehaltert.

Eine Spanneinrichtung 4 kann durch manuelle Betätigung eines Spannhebels 41 wahlweise in Fixierstellung (Feststellposition, geschlossener Zustand) oder Freigabestellung (Löse-position, geöffneter Zustand) gebracht werden. Dabei ist in Freigabestellung das innere Mantelrohr 31 zur Längsverstellung in Richtung der Längsachse L innerhalb der äußeren Manteleinheit 33 teleskopartig verschiebbar, und die äußere Manteleinheit 33 ist in Höhenrichtung H relativ zur Konsole 2 in den Pfeilrichtungen auf und ab verstellbar. In Fixierstellung ist sowohl das innere Mantelrohr 31 in Längsrichtung als auch die äußere Manteleinheit 33 in Höhenrichtung H fixiert. Die Fixierstellung entspricht dem Normalbetrieb der Lenksäule 1, in dem sichergestellt ist, dass bei den üblicherweise über das Lenkrad auf die Lenkspindel 30 einwirkenden Kräften die eingestellte Lenkradposition nicht verändert wird.

Im Einzelnen umfasst die Spanneinrichtung 4 einen drehfest mit dem Spannhebel 41 verbundenen Spannbolzen 42, welcher quer zur Längsachse L durch Langlöcher 43 in den einander gegenüberliegenden Seitenwangen 22, 23 hindurchgeführt ist. Über eine an sich bekannte Spannmechanik, die wie in der dargestellten Ausführung eine drehfest auf dem Spannbolzen 42 angebrachte erste Nockenscheibe 44 und eine dieser gegenüberliegende, drehfest an der Seitenwange 22 angeordneten zweite Nockenscheibe 45 umfassen kann, wird bei einer Drehung die zweite Nockenscheibe 45 relativ zum Spannbolzen 42 axial verlagert und so von außen gegen die Seitenwange 22 angedrückt. Dadurch, dass der Spannbolzen 42 an der gegenüberliegenden Seitenwange 23 axial unverschiebbar gelagert ist, werden die beiden Seitenwangen 22 und 23 gegeneinander bewegt, und die dazwischen angeordnete äußere Manteleinheit 33 kraftschlüssig festgeklemmt. Anstelle der gezeigten Nockenscheiben 44, 45 können auch andere Mechanismen zur Umsetzung einer Drehung in eine Klemmbewegung zum Einsatz kommen, beispielsweise mit Kippstiften oder Wälzkörpern. Bei der Verspannung wird durch die Klemmkraft ebenfalls die äußere Manteleinheit 42 quer zur Längsachse L zusammengedrückt, so dass das innere Mantelrohr 31 darin festgeklemmt wird.

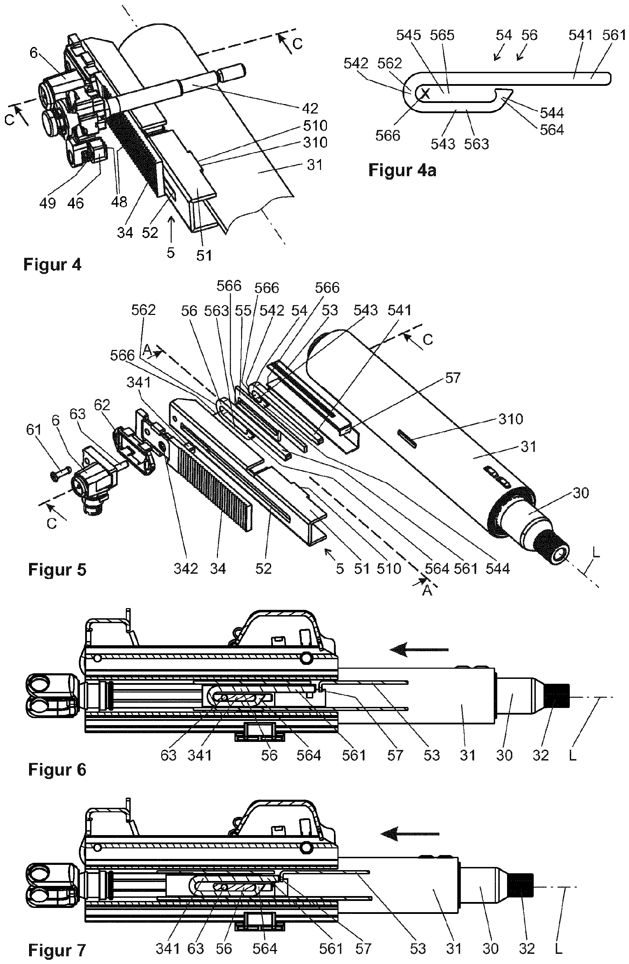

Die Spanneinrichtung 4 weist ein Arretierteil 46 auf, welches mit der Nockenscheibe 44 unter Zwischenschaltung einer Feder 49 verbunden ist und durch eine Öffnung 47 in Richtung auf das innere Mantelrohr 31 zu bewegbar ist. Wird die Spanneinrichtung 4 in Fixierstellung gebracht, wird das Arretierteil 46 gegen ein Eingriffsteil 34 verspannt, welches mit dem inneren Mantelrohr 31 über eine erfindungsgemäße Energieabsorptionseinrichtung 5 verbunden ist. Auf ihren gegeneinander gerichteten Kontaktflächen können das Arretierteil 46 und das Eingriffsteil 34 miteinander korrespondierende Verzahnungen 48 oder dergleichen Oberflächenstrukturierungen 48 aufweisen, die bei einer Verspannung für eine formschlüssige Verbindung sorgt, wie dies in der auseinandergezogenen Darstellung von Figur 4 deutlich erkennbar ist. Die Feder 49 gewährleistet im Fall einer Zahn-auf-Zahn-Situation der korrespondierenden Verzahnung 48, dass die Spanneinrichtung 4 in die Fixierstellung überführt werden kann. Unter einer Zahn-auf-Zahn-Situation ist jene Stellung des Arretierteils 46 gegenüber dem Eingriffsteil 34 zu verstehen, in dem es zu einem Kontakt der Zahnköpfe des Arretierteils 46 mit den Zahnköpfen des Eingriffsteils während der Überführung in die Fixierstellung kommt. Mit anderen Worten können die Zähne des Arretierteils 38 nicht in den korrespondierenden Zahnzwischenraum des Eingriffsteil 34 eingreifen.

Die Energieabsorptionseinrichtung 5 ist an dem inneren Mantelrohr 31 auf einer Seite angebracht, und zwar in Figuren 1 bis 3 auf der dem Betrachter zugewandten Seite und in Figuren 4, 5, 8 und 9 auf der linken Seite des Mantelrohrs 31. Die Energieabsorptionseinrichtung 5 weist ein Halteprofil 51 in Form einer U-förmigen Schiene mit im Wesentlichen rechteckigem Querschnitt auf, die fest mit dem inneren Mantelrohr 31 verbunden ist und sich in Längsrichtung erstreckt, wobei der offene Querschnitt gegen die Oberfläche des inneren Mantelrohrs 31 gerichtet ist. Mittels Formschlusselementen 510, die in korrespondierende Aufnahmeöffnungen 310 in dem inneren Mantelrohr eingreifen, ist das Halteprofil 51 fest mit dem Mantelrohr 31 beispielsweise mittels Laserschweissen verbunden. Auf diese Weise bildet das Halteprofil 51 zusammen mit dem inneren Mantelrohr 31 ein langgestrecktes Gehäuse der Energieabsorptionseinrichtung 5 mit im Wesentlichen rechteckigem Innenquerschnitt, welches sich auf einer Seite des Mantelrohrs 31 parallel zur Längsachse L erstreckt. Auf seiner radial nach außen gerichteten Außenseite weist das Halteprofil 51 einen sich parallel zur Längsachse L erstreckenden Schlitz 52 auf.

In dem Halteprofil 51 ist ein ebenfalls U-förmiges Innenprofil 53 angeordnet, welches sich in Längsrichtung erstreckt und nach außen, d.h. zum Halteprofil 51 hin offen ist. In dem Innenprofil 53 sind - von der Längsachse L aus gesehen - stapelförmig übereinander ein erstes Energieabsorptionselement 54, ein Separierungselement 55 und ein zweites Energieabsorptionselement 56 angeordnet. Das Innenprofil 53 ist aus einem Federstahlblech ausgebildet.

Das erste und zweite Energieabsorptionselement 54 und 56 sind hinsichtlich ihrer grundsätzlichen Funktion identisch. Wie in der Figur 4a dargestellt, sind die Energieabsorptionselemente 54 und 56 als bogenförmiger Biegedraht bzw. Biegestreifen gestaltet, mit einem ersten Schenkel 541 bzw. 561, der über eine Umbiegung 542 bzw. 562 von 180° mit einem zweiten Schenkel 543 bzw. 563 verbunden ist. Am Ende des zweiten Schenkels 543 bzw. 563 ist jeweils ein Mitnehmerhaken 544 bzw. 564 durch eine Umbiegung gegen den ersten Schenkel 541 bzw. 561 ausgebildet. Somit wird durch die Schenkel 541, 543, die Umbiegung 542 und den Mitnehmerhaken 544, bzw. durch die Schenkel 561, 563, die Umbiegung 562 und den Mitnehmerhaken 564 jeweils eine Eingriffsöffnung 545 bzw. 565 eines Energieabsorptionselements 54 bzw.56 geformt. Die Energieabsorptionselemente 54 und 56 können als Stanzteile ausgebildet sein, so dass eine kostengünstige Herstellung gewährleistet ist.

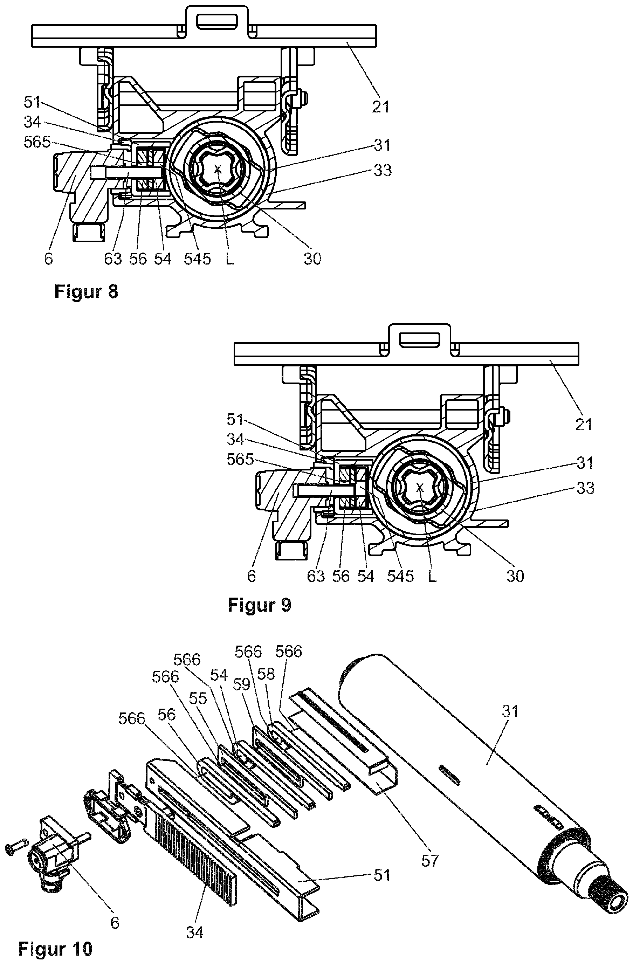

In den Darstellungen der Figuren 5, 6, 7, 8, 9, und 10 ist deutlich erkennbar, wie die Energieabsorptionselemente 54 und 56 erfindungsgemäß nebeneinander gestapelt sind, nämlich dass jeweils zwei Biegestreifen senkrecht zur Streifenebene, der Ebene ihrer Umbiegung 542 bzw 562 stapelförmig übereinander, beziehungsweise nebeneinander, angeordnet sind, also in Richtung ihrer Biegeachse 566. Dadurch sind die Biegestreifen so nebeneinander gestapelt angeordnet, dass sie mit ihren Eingriffsöffnungen 545 und 565 zumindest teilweise deckungsgleich übereinander liegen. Im Beispiel sind alle Biegeachsen 566 der Biegestreifen auf einer Linie, die parallel zur Flächennormalen aller Streifenebenen ausgerichtet ist. Dadurch kann beispielsweise ein Mitnehmerstift 63 in Richtung der Flächennormalen die Eingriffsöffnungen 545 und 565 erfindungsgemäß übereinander gestapelter Energieabsorptionselemente 54 und 56 durchgreifen bzw. in diese eintauchen. Dies ist beispielsweise der Schnittansicht von Figur 8 eindeutig entnehmbar. Dabei verläuft die vorgenannte Flächennormale in Richtung des Mitnehmerstifts 63 durch die Eingriffsöffnungen 545 und 565 hindurch, parallel zu der in Figur 4 und 5 eingezeichneten Schnittlinie C-C.

Mit ihrem ersten Schenkel 541 bzw. 561 stützen sich die Energieabsorptionselemente 54 und 56 entgegen der Längsrichtung (Pfeil in Figur 6 und 7) gegen einen nach innen in den Querschnitt des Halteprofils 51 vorspringendes Widerlager 57 ab, welches einen Anschlag in Längsrichtung bildet.

Auf dem Halteprofil 51 ist das Eingriffsteil 34 angebracht, wobei es mit einem Mitnehmer 341 durch den Schlitz 52 hindurch in die Eingriffsöffnung 546 des Energieabsorptionselements 56 eingreift. Dadurch kann das Eingriffsteil 34 parallel zur Längsachse L in dem Halteprofil 51 geführt hinter den Mitnehmerhaken 564 des Energieabsorptionselements 56 eingreifen und dieses im Crashfall verbiegen, d.h. plastisch verformen.

Der Normalzustand einer Lenksäule 1 ist in Figuren 1,2 und 6 dargestellt, wogegen in Figur 3 und 7 die Situation nach einem Crashfall dargestellt ist. Dabei ist erkennbar, dass das innere Mantelrohr 31 relativ zur äußeren Manteleinheit 33 in Längsrichtung, mit dem Pfeil angedeutet, eingeschoben ist.

Auf der vom Halteprofil 51 abgewandten Außenseite ist auf dem Eingriffsteil 34 ein pyroelektrischer Aktuator (Pyroswitch) 6 angebracht, und zwar mittels eines Befestigungselements 61 und einer Halterung 62. Der Aktuator 6 weist einen Mitnehmerstift 63 auf, der quer zur Längsachse durch eine Öffnung 342 in dem Eingriffselement 34 und den Schlitz 52 im Halteprofil 5 hindurch geführt ist. Bei einer Zündung des Aktuators 6 wird der Mitnehmerstift 63 schlagartig in Richtung von dem inneren Mantelrohr 31 weg bewegt und durchgreift nur noch die Eingriffsöffnung 565 des Energieabsorptionselementes 56, wodurch er das Energieabsorptionselement 54 außer Eingriff bringt. Somit ist lediglich über den Mitnehmer 341 des Eingriffsteils das Energieabsorptionselement 56 mit dem Eingriffsteil 34 koppelt. Dadurch, dass das Eingriffsteil 34 und das Arretierteil 46 im Normalzustand in Längsrichtung unverschiebbar miteinander verbunden sind, wird somit das Energieabsorptionselement 54 aus den Kraftfluss zwischen dem inneren Mantelrohr 31 und der äußeren Manteleinheit 33 ausgekoppelt, wenn diese im Crashfall in Längsrichtung gegeneinander verschoben werden. Ebenfalls ist es denkbar und möglich, dass das Energieabsorptioselement 54 durch die schlagartige Bewegung des Mitnehmerstiftes 63 eingekoppelt wird, jedoch birgt dies die Gefahr, dass der Mitnehmerstift 63 sich während der schlagartigen Bewegung verklemmt und somit das Einkoppeln nicht vollzogen werden kann. Das Auskoppeln oder Einkoppeln findet im Fall eines Fahrzeugfrontalaufpralls, auch Crash genannt, statt. Dabei wird auf Grund der im Augenblicke des Crash vorherschende Eigenschaften, beispielsweise ob der Fahrzeugführer angegurtet ist oder nicht, entschieden, ob das Energieabsorptionselement 54 ein- bzw. ausgekoppelt wird.

Diese Funktion ist im Querschnitt in den Figuren 8 und 9 deutlich erkennbar: Figur 8 zeigt den Normalzustand, in dem der Mitnehmerstift 63 in die Eingriffsöffnung 565 und 545 der Energieabsorptionselemente 56 und 54 eingetaucht ist. Im Crashfall würde entsprechend das erste Energieabsorptionselement 56 und das zweite Energieabsorptionselement 54 verformt. Dies wäre beispielsweise dann der Fall, wenn der Fahrzeugführer im Augenblick des Crash nicht angegurtet ist, da auf Grund der Einkopplung der beiden Energieabsorptionselemente 54 und 56 eine höhere Energie absorbiert werden kann, die durch den nicht angegurteten Fahrzeugführer in die Lenksäule 1 eingetragen wird. Bei einer Auslösung des pyroelektrischen Aktuators 6 kommt es zu der in Figur 9 dargestellten Situation, wobei der Mitnehmerstift 63 aus der Eingriffsöffnung 545 des Energieabsorptionselements 54 heraus gezogen wurde und dieses im Crashfall somit nicht deformiert wird. Auf diese Weise können durch Auslösung des Aktuators 6 im Crashfall bedarfsweise unterschiedliche Crashniveaus aktiviert werden.

Bei der in Figur 10 in derselben Ansicht wie in Figur 5 dargestellten weiteren Ausführungsform der Erfindung ist ein weiteres (drittes) Energieabsorptionselement 58 unter Zwischenfügung eines weiteren Separierungselements 59 ebenfalls in einer stapelförmigen bzw. sandwichartigen Anordnung in dem Halteprofil 51 auf einer Seite des inneren Mantelrohrs 31 angebracht. Durch Aktivierung eines entsprechend gestalteten pyrotechnischen Aktuators 6 können somit im Bedarfsfall unterschiedliche Konfigurationen der Energieabsorptionselemente 54, 56 und/oder 58 ein- oder ausgekoppelt werden und somit mehr als zwei unterschiedliche Crashniveaus aktiviert werden.

In einer nicht dargestellten alternativen Ausführungsform für das dritte Energieabsorptionselement 58 ein separater pyrotechnischer Aktuator vorgesehen.

Dank der Erfindung kann Lenksäule 1 mit einer einzigen Energieabsorptionsvorrichtung 5, welche die Aktivierung unterschiedlicher Crashniveaus ermöglicht, mit geringerem Fertigungsaufwand besonders kompakt und kostengünstig bereitgestellt werden.

**Bezugszeichenliste**

| | | | |
|---|---|---|---|
| 1 | Lenksäule | 49 | Feder |
| 2 | Konsole | 5 | Energieabsorptionseinrichtung |
| 21 | Befestigungsmittel | 51 | Halteprofil |
| 22, 23 | Seitenwangen | 510 | Formschlusselemente |
| 24 | Schwinge | 52 | Schlitz |
| 25 | Schwenkachse | 53 | Innenprofil |
| 30 | Lenkspindel | 54, 56 | Energieabsorptionselement |
| 31 | (inneres) Mantelrohr | 541, 561 | erster Schenkel |
| 310 | Aufnahmeöffnungen | 542, 562 | Umbiegung |
| 32 | Ende | 543, 563 | zweiter Schenkel |
| 33 | (äußere) Manteleinheit | 544, 564 | Mitnehmerhaken |
| 34 | Eingriffsteil | 545, 565 | Eingriffsöffnung |
| 341 | Mitnehmer | 566 | Biegeachse |
| 342 | Öffnung | 55, 59 | Separierungselement |
| 4 | Spanneinrichtung | 57 | Widerlager |
| 41 | Spannhebel | 58 | Energieabsorptionselement |
| 42 | Spannbolzen | 6 | pyroelektrischer Aktuator |
| 43 | Langloch | 61 | Befestigungselement |
| 44, 45 | Nockenscheiben | 62 | Halterung |
| | | 63 | Mitnehmerstift |
| 46 | Arretierteil | L | Längsachse |
| 47 | Öffnung | | |
| 48 | Verzahnung | | |

## Patentansprüche

1. Lenksäule (1) für ein Kraftfahrzeug, umfassend
eine in einem inneren Mantelrohr (31) um ihre Längsachse (L) drehbar gelagerte Lenkspindel (30),
eine äußere Manteleinheit (33), in der das innere Mantelrohr (31) gehaltert ist, die mit der Karosserie eines Kraftfahrzeugs direkt oder indirekt verbindbar ist,
eine Spanneinrichtung (4), die in Fixierstellung die äußere Manteleinheit (33) relativ zu dem inneren Mantelrohr (31) festlegt und die in Freigabestellung eine Verstellung des inneren Mantelrohrs (31) relativ zur äußeren Manteleinheit (33) zumindest in Längsrichtung freigibt,
wobei die Spanneinrichtung (4) mindestens ein Arretierteil (46) aufweist, welches sich in Längsrichtung an der äußeren Manteleinheit (33) abstützt und in Fixierstellung in Längsrichtung unverschiebbar mit einem Eingriffsteil (34) verbunden ist, welches mit dem inneren Mantelrohr (31) verbunden ist, und in Freigabestellung von dem Eingriffsteil (34) gelöst ist und eine relative Bewegung des inneren Mantelrohrs (31) zur äußeren Manteleinheit (33) in Längsrichtung freigibt,
wobei das innere Mantelrohr (31) und die äußere Manteleinheit (33) über eine Energieabsorptionseinrichtung (5) gekoppelt sind, die zumindest zwei Energieabsorptionselemente (54, 56) aufweist, von denen zumindest ein erstes (56) oder ein zweites (54) Energieabsorptionselement zwischen dem inneren Mantelrohr (31) und dem Eingriffsteil (34) einkoppelbar ist, welches in eingekoppeltem Zustand in Fixierstellung der Spanneinrichtung (4) bei einer relativen Verschiebung von innerem Mantelrohr (31) und äußerer Manteleinheit (33) plastisch verformt wird,
wobei zumindest das erste und zweite Energieabsorptionselement (54, 56) bezüglich der Längsachse in einer Radialrichtung auf der gleichen Seite des inneren Mantelrohrs (31) angeordnet sind, **dadurch gekennzeichnet, dass** die Energieabsorptionselemente (54, 56) bezüglich der Längsachse (L) in einer Radialrichtung sandwichartig benachbart angeordnet sind.

2. Lenksäule nach einem der vorhergehenden Ansprüche , **dadurch gekennzeichnet, dass** zwischen den Energieabsorptionselementen (54, 56) ein Separierungselement (55) angeordnet ist.

3. Lenksäule nach einem der vorhergehenden Ansprüche , **dadurch gekennzeichnet, dass** mindestens zwei Energieabsorptionselemente (54, 56) in einem gemeinsamen Gehäuse (51) angeordnet sind.

4. Lenksäule nach einem der vorhergehenden Ansprüche, **dadurch gekennzeichnet, dass** zumindest eines der Energieabsorptionselemente (54, 56) als langgestrecktes Biegeelemente ausgebildet ist, das zwei über eine Umbiegung (542, 562) miteinander verbundene Schenkel (541, 561, 543, 563) aufweist, wobei der eine Schenkel (543, 563) am Eingriffsteil (34) festlegbar ist und der andere Schenkel (541, 561) an dem inneren Mantelrohr (31) in Längsrichtung abstützbar ist.

5. Lenksäule nach einem der Ansprüche 2, 3 oder 4, **dadurch gekennzeichnet, dass** zumindest ein Biegeelement (54, 56) und/oder das Gehäuse (51) und/oder das Separierungselement (55) mit einer Gleitbeschichtung versehen ist.

6. Lenksäule einem der vorhergehenden Ansprüche, **dadurch gekennzeichnet, dass** die Energieabsorptionseinrichtung (5) eine Stellvorrichtung (6) aufweist, mit einem bewegbaren Koppelelement (63), welches bei Aktivierung der Stellvorrichtung (6) ein Energieabsorptionselement (54) zwischen dem inneren Mantelrohr (31) und dem Eingriffsteil einkoppelt oder auskoppelt.

7. Lenksäule nach Anspruch 6, **dadurch gekennzeichnet, dass** die Stellvorrichtung (6) einen pyroelektrischen Aktuator (6) aufweist, der zum pyrotechnischen Antrieb des Koppelelements (63)ansteuerbar ist.

8. Lenksäule nach Anspruch 6 oder 7, **dadurch gekennzeichnet, dass** das Koppelelement (63) als Mitnehmerstift (63) ausgebildet ist, der zur Einkopplung oder Auskopplung quer zur Längsachse (L) durch eine Öffnung (342) in dem Eingriffsteil (34) bewegbar und in oder außer Wirkeingriff mit dem ersten Schenkel 544, 564) eines langgestreckten Biegeelements (54, 56) bringbar ist.

9. Lenksäule nach einem der vorangegangenen Ansprüche, **dadurch gekennzeichnet, dass** die äußere Manteleinheit (33) in einer Konsole gehalten ist, die am Fahrzeug fixierbar ist.

## Claims

1. Steering column (1) for a motor vehicle, comprising a steering spindle (30) which is mounted in an inner steering column tube (31) such that it can be rotated about its longitudinal axis (L),
an outer shell unit (33), in which the inner steering column tube (31) is secured and which can be connected directly or indirectly to the vehicle body of a motor vehicle,
a clamping device (4) which, in the fixing position, fixes the outer shell unit (33) relative to the inner steering column tube (31) and which, in the release position, releases an adjustment of the inner steering column tube (31) relative to the outer shell unit (33) at least in the longitudinal direction,
the clamping device (4) comprising at least one locking part (46) which is supported on the outer shell unit (33) in the longitudinal direction and, in the fixing position, is connected such that it cannot be displaced in the longitudinal direction to an engagement part (34) which is connected to the inner steering column tube (31), and, in the release position, is released from the engagement part (34) and releases a relative movement of the inner steering column tube (31) with respect to the outer shell unit (33) in the longitudinal direction,
the inner steering column tube (31) and the outer shell unit (33) being coupled via an energy absorption device (5) which comprises at least two energy absorption elements (54, 56), of which at least a first (56) or a second (54) energy absorption element can be coupled in between the inner steering column tube (31) and the engagement part (34), which first or second energy absorption element (56, 54) is deformed plastically in the coupled-in state, in the fixing position of the clamping device (4), in the case of a relative displacement of the inner steering column tube (31) and the outer shell unit (33),
at least the first and second energy absorption element (54, 56) being arranged on the same side of the inner steering column tube (31) in a radial direction with regard to the longitudinal axis, **characterized in that** the energy absorption elements (54, 56) are arranged adjacently in a sandwich-like manner in a radial direction with regard to the longitudinal axis (L).

2. Steering column according to one of the preceding claims, **characterized in that** a separation element (55) is arranged between the energy absorption elements (54, 56) .

3. Steering column according to either of the preceding claims, **characterized in that** at least two energy absorption elements (54, 56) are arranged in a common housing (51).

4. Steering column according to one of the preceding claims, **characterized in that** at least one of the energy absorption elements (54, 56) is configured as an elongate flexure element which comprises two limbs (541, 561, 543, 563) which are connected to one another via a bend (542, 562), it being possible for the one limb (543, 563) to be fixed on the engagement part (34) and for the other limb (541, 561) to be supported in the longitudinal direction on the inner steering column tube (31).

5. Steering column according to one of Claims 2, 3 or 4, **characterized in that** at least one flexure element (54, 56) and/or the housing (51) and/or the separating element (55) are/is provided with a sliding coating.

6. Steering column according to one of the preceding claims, **characterized in that** the energy absorption device (5) comprises an actuating apparatus (6), having a movable coupling element (63) which, in the case of activation of the actuating apparatus (6), couples an energy absorption element (54) in or out between the inner steering column tube (31) and the engagement part.

7. Steering column according to Claim 6, **characterized in that** the actuating apparatus (6) comprises a pyroelectric actuator (6) which can be actuated for the pyrotechnical drive of the coupling element (63).

8. Steering column according to Claim 6 or 7, **characterized in that** the coupling element (63) is configured as a driver pin (63) which can be moved through an opening (342) in the engagement part (34) transversely with respect to the longitudinal axis (L) for coupling in or out, and can be moved into or out of operative engagement with the first limb (544, 564) of an elongate flexure element (54, 56).

9. Steering column according to one of the preceding claims, **characterized in that** the outer shell unit (33) is held in a bracket which can be fixed on the vehicle.

## Revendications

1. Colonne de direction (1) pour un véhicule automobile, comprenant
un arbre de direction (30) monté à rotation autour de son axe longitudinal (L) dans un tube d'enveloppe intérieur (31),
une unité d'enveloppe extérieure (33), dans laquelle est maintenu le tube d'enveloppe intérieur (31) et qui peut être reliée directement ou indirectement à la carrosserie d'un véhicule automobile,
un dispositif de serrage (4) qui, dans la position d'immobilisation, bloque l'unité d'enveloppe extérieure (33) par rapport au tube d'enveloppe intérieur (31) et, dans la position de libération, libère un positionnement du tube d'enveloppe intérieur (31) par rapport à l'unité d'enveloppe extérieure (33) au moins dans la direction longitudinale,
le dispositif de serrage (4) possédant au moins une partie de blocage (46) qui s'appuie contre l'unité d'enveloppe extérieure (33) dans la direction longitudinale et qui, dans la position d'immobilisation, est reliée dans la direction longitudinale de manière non coulissante à une partie de mise en prise (34), laquelle est reliée au tube d'enveloppe intérieur (31) et, dans la position de libération, est détachée de la partie de mise en prise (34) et libère un mouvement relatif du tube d'enveloppe intérieur (31) par rapport à l'unité d'enveloppe extérieure (33) dans la direction longitudinale,
le tube d'enveloppe intérieur (31) et l'unité d'enveloppe extérieure (33) étant couplés par le biais d'un dispositif d'absorption d'énergie (5) qui possède au moins deux éléments d'absorption d'énergie (54, 56), parmi lesquels au moins un premier (56) ou un deuxième (54) élément d'absorption d'énergie peut être accouplé entre le tube d'enveloppe intérieur (31) et la partie de mise en prise (34), laquelle, à l'état accouplé, dans la position d'immobilisation du dispositif de serrage (4), subit une déformation plastique lors d'un coulissement relatif du tube d'enveloppe intérieur (31) et de l'unité d'enveloppe extérieure (33),
au moins le premier et le deuxième élément d'absorption d'énergie (54, 56) étant disposés, dans une direction radiale, du même côté du tube d'enveloppe intérieur (31) par rapport à l'axe longitudinal, **caractérisée en ce que** les éléments d'absorption d'énergie (54, 56) sont disposés de manière voisine en sandwich dans une direction radiale par rapport à l'axe longitudinal (L).

2. Colonne de direction selon l'une des revendications précédentes, **caractérisée en ce qu'**un élément de séparation (55) est disposé entre les éléments d'absorption d'énergie (54, 56).

3. Colonne de direction selon l'une des revendications précédentes, **caractérisée en ce qu'**au moins deux éléments d'absorption d'énergie (54, 56) sont disposés dans un boîtier (51) commun.

4. Colonne de direction selon l'une des revendications précédentes, **caractérisée en ce qu'**au moins l'un des éléments d'absorption d'énergie (54, 56) est réalisé sous la forme d'un élément de flexion allongé, lequel possède deux branches (541, 561, 543, 563) reliées entre elles par un cintrage (542, 562), une branche (543, 563) pouvant être calée au niveau de la partie de mise en prise (34) et l'autre branche (541, 561) pouvant s'appuyer contre le tube d'enveloppe intérieur (31) dans la direction longitudinale.

5. Colonne de direction selon l'une des revendications 2, 3 ou 4, **caractérisée en ce qu'**au moins un élément de flexion (54, 56) et/ou le boîtier (51) et/ou l'élément de séparation (55) est pourvu d'un revêtement glissant.

6. Colonne de direction selon l'une des revendications précédentes, **caractérisée en ce que** le dispositif de flexion (5) possède un arrangement de commande (6), comprenant un élément de couplage (63) mobile qui, lors de l'activation de l'arrangement de commande (6), accouple ou désaccouple un élément d'absorption d'énergie (54) entre le tube d'enveloppe intérieur (31) et la partie de mise en prise.

7. Colonne de direction selon la revendication 6, **caractérisée en ce que** l'arrangement de commande (6) possède un actionneur pyroélectrique (6) qui peut être excité en vue de l'entraînement pyrotechnique de l'élément de couplage (63).

8. Colonne de direction selon la revendication 6 ou 7, **caractérisée en ce que** l'élément de couplage (63) est réalisé sous la forme d'une broche d'entraînement (63) qui, pour l'accouplement ou le désaccouplement, peut être déplacée transversalement par rapport à l'axe longitudinale (L) à travers une ouverture (342) dans la partie de mise en prise (34) et peut être amenée en ou hors prise active avec la première branche (544, 564) d'un élément de flexion (54, 56) allongé.

9. Colonne de direction selon l'une des revendications précédentes, **caractérisée en ce que** l'unité d'enveloppe extérieure (33) est maintenue dans une console qui peut être immobilisée au niveau du véhicule.
